# EUROPÄISCHE PATENTSCHRIFT

(11) **EP 3 188 846 B1**
(45) Veröffentlichungstag und Bekanntmachung des Hinweises auf die Patenterteilung: **04.03.2020**
(21) Anmeldenummer: 15756131.7
(22) Anmeldetag: 18.08.2015
(51) Int. Cl.: B05C 17/005, B05C 7/00, B29C 73/02, F16B 11/00, B05B 1/14, B05B 13/06, B62D 27/02

(54) **KLEBSTOFFVERTEILVORRICHTUNG SOWIE VERFAHREN ZUM VERKLEBEN VON HOHLPROFILEN MIT EINER KLEBSTOFFVERTEILVORRICHTUNG**
ADHESIVE-DISTRIBUTING DEVICE AND METHOD FOR ADHESIVELY BONDING HOLLOW PROFILES USING AN ADHESIVE-DISTRIBUTING DEVICE
DISPOSITIF DE DISTRIBUTION D'ADHÉSIF AINSI QUE PROCÉDÉ DE COLLAGE DE PROFILÉS CREUX AVEC UN DISPOSITIF DE DISTRIBUTION D'ADHÉSIF

(30) Priorität: 04.09.2014 DE 102014217724
(43) Veröffentlichungstag der Anmeldung: 12.07.2017
(73) Patentinhaber: Bayerische Motoren Werke Aktiengesellschaft, 80809 München (DE)
(72) Erfinder: SUTTER, Nathanael, 85635 Höhenkirchen (DE)
(86) Internationale Anmeldenummer: PCT/EP2015/068945
(87) Internationale Veröffentlichungsnummer: WO 2016/034406

(56) Entgegenhaltungen:
- EP-A1- 2 301 826
- EP-A2- 1 553 311
- WO-A1-93/18311
- DE-A1-102012 012 298

## Beschreibung

Die vorliegende Erfindung betrifft eine Klebstoffverteilvorrichtung mit den Merkmalen von Anspruch 1 sowie ein Verfahren zum Verkleben von Hohlprofilen mit einer Klebstoffverteilvorrichtung gemäß den Merkmalen von Anspruch 7. Die vorliegende Erfindung betrifft daher insbesondere eine Klebstoffverteilvorrichtung zur Verwendung bei der Reparatur oder Instandsetzung eines Hohlprofils, bestehend aus einem Adapterkörper in dem wenigstens ein Kanalsystem aus wenigstens zwei miteinander verbundenen Kanälen angeordnet ist, wobei wenigstens ein Kanal mit einer Injektionsöffnung zum Injizieren von Klebstoff in das Kanalsystem verbunden ist, wobei ferner jeder Kanal mit wenigstens einer Austrittsöffnung ausgebildet ist.

Als Hohlprofil im Sinne der vorliegenden Erfindung sind alle komplexen Profilgeometrien von den einfachen Grundformen "rund", "quadratisch", "rechteckig" sowie davon abweichende (umfangsgeschlossene) Formen, wie zum Beispiel oval, zu verstehen und solche Profile, die wenigstens abschnittsweise, vorzugsweise endseitig über einen solchen umfangsgeschlossenen Hohlprofilabschnitt verfügen.

Allgemein werden Konstruktionsprofile zunehmend aus Faserverbundwerkstoff im Fahrzeug- und Flugzeugbau eingesetzt. Im Fahrzeugbau besteht ein Bestreben danach, leichte, jedoch hochfeste Profile einzusetzen, die den zu erwartenden Belastungen standhalten. Allerdings kommt es immer wieder vor, dass durch Beschädigungen, Unfälle oder andere Einflüsse ein eingebautes Konstruktionsprofil repariert werden muss. Die von der Instandsetzungsmaßnahme betroffenen Profilabschnitte müssen dann an den beschädigten Stellen zuverlässig ausgebessert werden.

Die DE 10 2012 012298 A1 betrifft ein Klebeverfahren und eine entsprechende Klebevorrichtung zum Zusammenkleben von Fügeteilen, die an ihren zusammenzufügenden Stirnflächen Klebeflächen aufweisen, insbesondere zum Zusammenkleben von Rotorblatthalbschalen zu einem Rotorblatt für eine Windkraftanlage. Es wird vorgeschlagen, dass die Fügeteile durch Injektionskleben miteinander verklebt werden, wobei ein Klebstoff in eine Klebefuge zwischen den Klebeflächen der Fügeteile injiziert wird.

Die WO 93/18311 A1 bezieht sich auf einen an einem Rohr zu befestigenden Stopfen mittels einer Klebeverbindung, wobei beim Einstecken des Stopfens der Klebstoff zugeführt wird. Die Oberfläche des zu verklebenden Stopfens oder die Innenfläche des Rohres ist mit einer Ausgleichsnut versehen, in die der Klebstoff mittels mindestens einer Einspritzung eingespritzt wird.

Aus der EP 0 561 800 B1 ist zum Beispiel ein Verfahren bekannt, bei dem ein beschädigter Längsträger an seiner Verbindungsstelle zu einem Knotenelement von diesem zunächst getrennt und anschließend durch einen neuen Träger ersetzt wird. Der neue Träger wird durch Schrauben, die sowohl den Flansch des Knotenelements als auch den neuen Träger durchsetzen, über eine eingesetzte Mutterplatte am Knotenblech befestigt. Solche bekannten Verbindungslösungen bieten allerdings vor allem bei Aluminiumlegierungen und bei Metallprofilen Vorteile, da hiermit eine Verbindung über Schmelzschweißen mit einem Festigkeitsabfall in der Schweißzone vermieden werden kann. Es werden im Stand der Technik noch zahlreiche weitere Reparaturverfahren erwähnt, bei denen typischerweise ein mechanisches Verbindungselement, wie eine Verbindungsmuffe, ein Doppler, ein Verbindungsadapter oder dergleichen verwendet werden, um ein Reparaturprofil daran zu befestigen. Solche Maßnahmen eignen sich aus diversen Gründen jedoch nicht dazu, im Fahrzeugbau zur Reparatur von Kunststoffverbundprofilen eingesetzt zu werden. Ein Nachteil besteht zum Beispiel in der mangelnden Zugänglichkeit, um die Verbindungsadapter überhaupt einsetzen und anbringen zu können, da diese nicht außen am Profil angebracht werden können, sondern so eingesetzt werden müssen, dass sie die Außenkontur des Fahrzeugs an dieser Stelle nicht sichtbar verändern.

Im Fahrzeugbau werden zunehmend Verbundprofile bei der Reparatur miteinander verklebt. Eine im Stand der Technik bekannte Maßnahme ist das Injektionskleben.

Das Injektionskleben ist ein Fertigungsprozess, bei dem ein flüssiger Stoff, und zwar ein Klebstoff, in einen fest umgrenzten Raum gefüllt d. h. injiziert wird, um sich dort zu verfestigen. Die Klebstoffapplikation erfolgt, im Unterschied zu anderen typischen Klebeverfahren, erst nach dem Fügen der zu verbindenden Bauteile. Beim Injektionskleben werden z. B. der hydrostatische Druck oder die Kapillarkräfte verwendet, um die Klebstoffverteilung zu erzielen. Im Gegensatz zur Passflächenfertigung ist beim Injektionskleben eine Haftung zu den betroffenen Oberflächen erwünscht.

Aus der Offenlegungsschrift DE 10 2012 012 298 A1 sind ein Injektionsklebeverfahren und eine entsprechende Klebevorrichtung zum Zusammenkleben von Fügeteilen bekannt, die an ihren zusammenzufügenden Stirnflächen Klebeflächen aufweisen, insbesondere zum Zusammenkleben von Rotorblatthalbschalen zu einem Rotorblatt für eine Windkraftanlage. Es wird dabei vorgeschlagen, dass die Fügeteile durch Injektionskleben miteinander verklebt werden, wobei ein Klebstoff in eine Klebefuge zwischen den Klebeflächen der Fügeteile injiziert wird.

Beim Injektionskleben ist die vollständige Füllung des für den Klebstoff vorgesehenen Injektionsraumes problematisch. Da die Kapillareffekte, die Profilgeometrie, die Oberflächenbeschaffenheit der Klebeflächen und die Viskosität des Klebstoffs Einflussgrößen darstellen, hat sich beim Injektionskleben der Nachteil gezeigt, dass oftmals ein unzureichender Klebstoffeintrag zum Versagen der Verklebung führt oder die Verklebung unbefriedigend ausgebildet ist. Da zunehmend Verbundwerkstoffe wie z. B. kohlefaserverstärkte Verbundwerkstoffe (CFK-Verbundwerkstoffe) mit komplexen Geometrien im Fahrzeugbau eingesetzt werden, zeigt sich dieser nachteilige Effekt noch stärker.

Beim Injektionskleben von CFK-Hohlprofilbauteilen in Fahrzeugen werden ferner Dichtungen oder Dichtelemente verwendet, um einen unerwünschten Klebstoffaustritt beim Injektionskleben zu verhindern. Bei diesem Instandsetzungsverfahren wird das beschädigte Hohlprofil im zu reparierenden Bereich aufgetrennt und anschließend ein Reparaturprofil in das Hohlprofil eingeschoben. Das Reparaturprofil weist einen endseitigen Montageabschnitt mit Dichtungen auf, vorzugsweise zwei Dichtungen, die den Raum zum Einspritzen von Klebstoff seitlich begrenzen und die zu verklebenden Verbindungsflächen in axialer Einsteckrichtung und zum Profilinneren hin abdichten. Der zwischen den Dichtungen gebildete Raum wird sodann mit Klebstoff über eine geeignet angebrachte Injektionsöffnung befüllt, typischerweise mit einer Klebstoffdicke, die in etwa dem Dickenmaß der komprimierten Dichtung entspricht.

Es bestehen neben den oben erwähnten Nachteilen der ausreichenden Befüllung noch eine Reihe weiterer praktischer Probleme bei den herkömmlichen Injektionsklebeverfahren. Unter anderem sind die folgenden Nachteile zu nennen:
- hohe Injektionsdrücke beim Injizieren des Klebstoffs führen immer wieder zu dem Versagen der Dichtungen;
- das mechanische Zusammenspiel und die Wirkungsweise der Dichtungen beim Zusammenfügen der Bauteile, wird von der Toleranzkette zwischen Außendurchmesser und Innendurchmesser der beteiligten Profile und der Toleranz der Dichtung mitbestimmt;
- beim Montieren der Reparaturprofile kann es vorkommen, dass die Dichtungen zu sehr an der Gegendichtfläche anliegen, dass ein einfaches Zusammenstecken ohne eine Beschädigung oder ohne eine unerwünschte Verschiebung der Dichtungen nicht oder nur schwer möglich ist sowie
- eine "scherende" Fügung, d. h. das seitliche Einpassen eines Reparaturprofils mit gleicher Profillänge wie der herausgetrennte Profilabschnitt, ist nicht möglich.

Ferner ist zu berücksichtigen, dass auch Montagen vor Ort an schwer zugänglichen Stellen durchgeführt werden müssen und die oben genannten Umstände die Montage und Instandsetzung erheblich erschweren. Eine mangelhafte Verklebung führt zu einem Folgeschaden, der wiederum kosten- und arbeitsintensiv beseitigt werden muss.

Vor diesem Hintergrund ist es Aufgabe der vorliegenden Erfindung, vorbesagte Nachteile zu überwinden und ein einfaches, zuverlässiges und universelles Verfahren sowie eine Vorrichtung zur Verbindung von Hohlprofilen (insbesondere für eine Reparaturmaßnahme) bereitzustellen. Bei der Fahrzeugreparatur von Kunststoffverbundbauteilen besteht ferner das Bedürfnis, reproduzierbare und standardisierte Reparaturverfahren einzusetzen, um die Qualität und Zuverlässigkeit einer Reparatur zu gewährleisten.

Diese Aufgabe wird gelöst mit einer Klebstoffverteilvorrichtung mit von Merkmalen des Anspruchs 1 sowie mit einem Verfahren zur Verbindung solcher Profile mit den Merkmalen des Anspruchs 7.

Grundgedanke der vorliegenden Erfindung ist es dabei, den Klebstoff nicht, wie aus dem Stand der Technik bekannt, lediglich über eine Injektionsöffnung in den Klebstoffspalt zwischen die Klebeflächen zu applizieren, sondern eine Klebstoffverteilvorrichtung mit einem integrierten Kanalsystem zum gezielten mehrdirektionalen Verteilen des Klebstoffes bereitzustellen, wobei das Kanalsystem mehrere gezielt positionierte Austrittsöffnungen (Ausgänge) aufweist, die den Klebstoff somit den diversen Positionen im Klebstoffspalt zuführen. Auf diese Weise wird eine gleichmäßige und vollständige Befüllung der Klebstoffkavität, d. h. des gesamten Klebstoffspaltes erzielt. Der Klebstoff kann sich entsprechend der Anzahl der Austrittsöffnungen aus dem Kanalsystem entlang von Fließfronten gleichmäßig verteilen.

Erfindungsgemäß wird demnach eine Klebstoffverteilvorrichtung zur Verwendung bei der Reparatur oder Instandsetzung eines Hohlprofils, bestehend aus einem Adapterkörper, in dem wenigstens ein Kanalsystem aus wenigstens zwei miteinander verbundenen Kanälen angeordnet ist, vorgesehen, wobei wenigstens ein Kanal mit einer Injektionsöffnung zum Injizieren von Klebstoff in das Kanalsystem verbunden ist, wobei ferner jeder Kanal mit wenigstens einer Austrittsöffnung ausgebildet ist. Der Adapterkörper kann dabei aus jedem geeigneten Material, vorzugsweise aber aus einem günstig zu bearbeitenden und leichten Material gebildet werden. Die Kanalführung und Position der Austrittsöffnung kann abhängig von der Profilgeometrie geeignet gewählt werden.

In einer vorteilhaften Ausführungsform der Erfindung weist der Adapterkörper zwei Injektionsöffnungen und zwei Kanalsysteme in je einem einsteckseitigen Abschnitt des Adapterkörpers auf. Dies ist insofern zweckmäßig, als sich damit ein Reparaturprofil mit einem zu reparierenden Hohlprofil auf erfindungsgemäße Weise einfach und sicher verbinden lässt. Der Adapter besteht hierzu aus einem ersten Abschnitt mit einem ersten Kanalsystem, der bestimmungsgemäß in dem stirnseitigen Endabschnitt des zu reparierenden Hohlprofils platziert werden soll, während der andere Abschnitt zur Platzierung in dem Reparaturprofil vorgesehen ist.

Es ist weiter mit Vorteil vorgesehen, dass das oder die Kanalsysteme als mehrdirektionale Kanalsysteme ausgebildet sind, welche einen durch die jeweilige Injektionsöffnung injizierten Klebstoff in unterschiedliche Raumrichtungen zu den Seitenflächen des Adapterkörpers leiten können. Besonders bevorzugt ist dabei eine Ausbildung der Kanäle, bei denen die jeweilige Austrittsöffnung in einer ihr zugeordneten Seitenfläche des Adapterkörpers ausgebildet ist.

In einer vorteilhaften Ausführungsform der Erfindung sind jeweils zwei oder mehrere der Kanäle des Kanalsystems über wenigstens einen Verbindungspunkt oder einen mehrdirektionalen Knotenpunkt miteinander verbunden, so dass das Kanalsystem die Klebstoffverteilung über lediglich eine gemeinsame Injektionsöffnung bewirken kann. So können zum Beispiel zwei Kanäle vertikal und zwei weitere Kanäle horizontal durch den Adapter hindurch verlaufen, wobei an einem gemeinsamen Kreuzungspunkt die vier Kanäle zusammenlaufen. An einem der Kanäle befindet sich die Öffnung zum Injizieren des Klebstoffes. Die drei anderen Kanäle münden in die jeweiligen Seitenflächen, wo sich Austrittsöffnungen der betroffenen Kanäle befinden.

Es ist ferner mit Vorteil vorgesehen, dass der Adapterkörper außen umlaufend entlang seiner Seitenflächen (gemeint sind diejenigen Seitenflächen, die den Innenwandflächen des Hohlprofils im eingeschobenen Zustand gegenüberliegen und den Klebespalt ausbilden), jeweils benachbart zu der oder den Injektionsöffnungen je zwei umlaufende Stege aufweist. Die Stege erzeugen damit eine Stufung und Begrenzung an den Stirnseiten der Klebstoffverteilvorrichtung. In einer besonders vorteilhaften Ausbildung der Erfindung sind die Stege so bemessen und geformt, dass diese an der Innenkontur des zu reparierenden Hohlprofils anliegen, sobald der Adapterkörper in das Hohlprofil gefügt wurde. Auf diese Weise wird der Klebespalt in und entgegen der Fügerichtung durch die beiden Stege begrenzt, wodurch eine Klebstoffkavität gebildet wird und wodurch injizierter Klebstoff sich nur innerhalb der Klebstoffkavität ausbreiten kann. Sofern zwischen den Stegen und der Innenwand bestimmungsgemäß oder aufgrund von Bauteiltoleranzen jedoch noch ein minimaler oder definierter, relativ kleiner Luftspalt vorhanden bleibt, wirken die Stege trotzdem als Barriere. Es kann in diesem weniger günstigen Fall allerdings vorkommen, dass Klebstoff in geringen Mengen durch die verbleibenden Spalte in das Innere der Hohlprofile austritt. Ferner kann vorgesehen sein, dass elastische Dichtlippen an Stelle der beiden Stege an dem Außenumfang des Adapterkörpers vorgesehen sind, die im gefügten Zustand an der Innenwand des Hohlprofils dichtend anliegen.

Ein weiterer Aspekt der vorliegenden Erfindung betrifft ein Verfahren zum Reparieren eines Hohlprofils mit einem Reparaturprofil, vorzugsweise z. B. eines Faserverbundhohlprofils eines Fahrzeugs. Bei diesem Instandsetzungsverfahren wird das beschädigte Hohlprofil im zu reparierenden Bereich aufgetrennt und anschließend ein Reparaturprofil in das Hohlprofil eingeschoben und unter Zuhilfenahme einer wie zuvor beschriebenen Klebstoffverteilvorrichtung klebend mit den Profilen verbunden, wobei das Verfahren mit wenigstens den folgenden Schritten durchgeführt wird:
a. Bereitstellen einer geeigneten Klebstoffverteilvorrichtung für die vorliegende Reparaturaufgabe, wobei die Klebstoffverteilvorrichtung eine zur Innenkontur des zu reparierenden Hohlprofils bzw. des Reparaturprofils korrespondierende, jedoch im Querschnitt verkleinerte Außenkontur aufweist;
b. Einbringen einer oder mehrerer wandseitiger Öffnungen in das Hohlprofil und/oder Reparaturprofil entsprechend der Anzahl der vorhandenen Injektionsöffnungen der Klebstoffverteilvorrichtung;
c. Einbringen der Klebstoffverteilvorrichtung mit jeweils einem Verbindungsabschnitt in das Hohlprofil sowie in das Reparaturprofil derart, dass die in Schritt b) eingebrachten Öffnungen mit der oder den korrespondierenden Injektionsöffnungen jeweils fluchten, und zwar unter Ausbildung eines umlaufenden Klebespaltes;
d. Injizieren eines Klebstoffes über die Injektionsöffnungen in das oder die Kanalsysteme der Klebstoffverteilvorrichtung solange bis der Klebespalt bzw. die Klebekavität vollständig mit Klebstoff gefüllt ist.

Eine besonders vorteilhafte Ausführungsform der Erfindung betrifft das "scherende", d. h. seitliche Fügen des Reparaturprofils in das zu reparierende Hohlprofil. Hierbei erfolgt der Schritt c) in drei Teilschritten, wobei in einem ersten Schritt die Klebstoffverteilvorrichtung vollständig in eines der beiden Profile eingeschoben wird, in einem zweiten Schritt die beiden Profile (mit ihrer Stirnseite bündig) zueinander positioniert werden und in einem dritten Schritt die Klebstoffverteilvorrichtung soweit in das andere Profil verschoben bzw. wieder herausgezogen wird, dass eine innenliegende Verbindung zwischen den Profilen geschaffen wird. Das Verschieben der Klebstoffverteilvorrichtung erfolgt dabei soweit bis die jeweils bestimmungsgemäß vorgesehene Öffnung in den Profilen mit der korrespondierenden Injektionsöffnung jeweils fluchtet.

Besonders bevorzugt ist eine Ausführungsform, bei welcher der Querschnitt der Öffnung in den jeweiligen Profilen größer ist, als der Öffnungsquerschnitt der korrespondierenden Eintrittsöffnung, so dass unmittelbar nach dem vollständigen Befüllen des Klebespaltes in Schritt d) überschüssiger Klebstoff aus der jeweiligen Öffnung austritt.

Ein weiterer Aspekt der vorliegenden Erfindung betrifft ein Reparaturprofil, bestehend aus einem Hohlprofilabschnitt und einer mit dem Hohlprofilabschnitt verbundenen, wie oben näher beschriebenen, Klebstoffverteilvorrichtung. Auf diese Weise lassen sich das Reparaturprofil und die Klebstoffverteilvorrichtung in einem Bauteil vereinen, so dass das Reparaturprofil bereits einen entsprechenden Adapterkörper mit einem Kanalsystem zum Verteilen des Klebstoffes integriert aufweist.

Andere vorteilhafte Weiterbildungen der Erfindung sind in den Unteransprüchen angegeben bzw. werden nachstehend zusammen mit der Beschreibung der bevorzugten Ausführung der Erfindung anhand der Figuren näher erläutert.

Es zeigen:
- Fig. 1: eine schematische Seitenansicht eines mittig aufgetrennten Hohlprofils mit einem Reparaturprofil und zwei erfindungsgemäßen Klebstoffverteilvorrichtungen und
- Fig. 2: eine schematische Schnittansicht entlang der Schnittlinie A - A aus Figur 1, bei der die Klebstoffverteilvorrichtung in das ebenfalls dargestellte Hohlprofil teilweise eingeschoben ist.

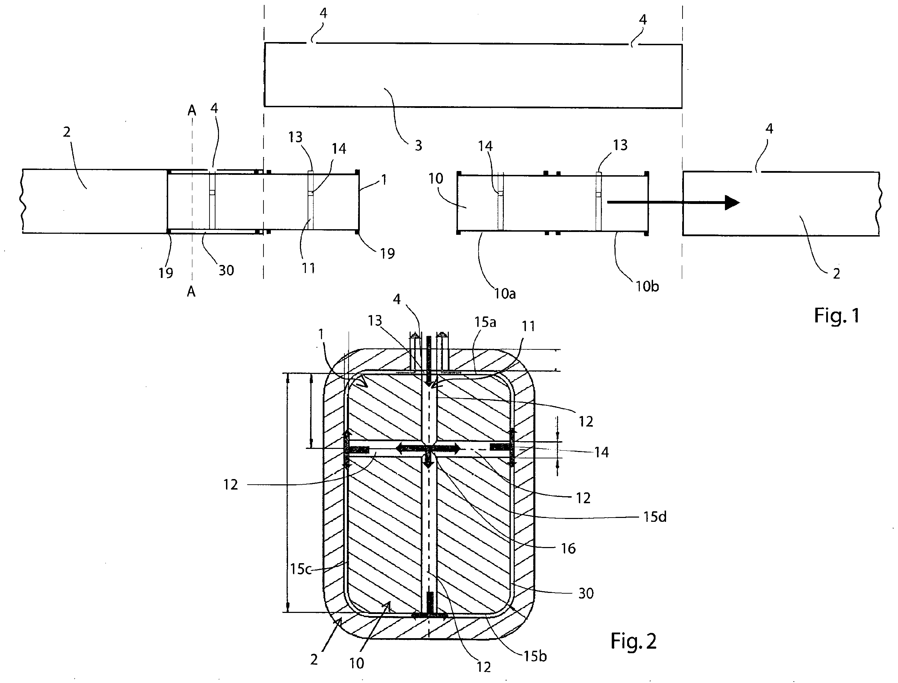

Die Figur 1 zeigt eine schematische Seitenansicht eines mittig aufgetrennten Hohlprofils 2 aus dem ein nicht dargestellter Hohlprofilabschnitt zwecks Reparatur- oder Instandsetzungszwecken herausgetrennt wurde. Oberhalb des herausgetrennten Abschnitts ist ein in der Länge passendes Reparaturprofil 3 dargestellt. Ferner sind zwei erfindungsgemäße Klebstoffverteilvorrichtungen 1 gezeigt, wovon die linke Klebstoffverteilvorrichtung 1 teilweise in das Hohlprofil 2 eingeschoben ist.

Die Klebstoffverteilvorrichtung 1 wird in Figur 2 als Schnittansicht entlang der Schnittlinie A - A aus Figur 1 gezeigt. Die in Figur 2 gezeigte Klebstoffverteilvorrichtung 1 besteht aus einem Adapterkörper 10 in dem zwei getrennte Kanalsysteme 11 jeweils in einem linken und rechten Adapterkörperabschnitt 10a, 10b vorgesehen sind, wie dies schematisch in Figur 1 gezeigt ist.

Das Kanalsystem 11 besteht aus vier miteinander verbundenen Kanälen 12, von denen je zwei vertikal und je zwei horizontal durch den Adapterkörper 10 hindurch verlaufen. Die vier Kanäle 12 laufen in einem gemeinsamen Kreuzungspunkt 16 zusammen. Der von oben kommende Kanal 12 ist mit einer Injektionsöffnung 13 zum Injizieren von Klebstoff mit dem Kanalsystem 11 verbunden. Es ist ferner erkennbar, dass jeder der drei weiteren Kanäle 12 mit einer Austrittsöffnung 14 ausgebildet ist.

Jedes Kanalsystem 11 bildet demzufolge ein mehrdirektionales Kanalsystem 11 aus. Durch die unterhalb der Öffnungen 4 befindlichen Injektionsöffnungen 13 wird Klebstoff in den jeweiligen oberen Kanal 12 injiziert. Der Klebstoff verteilt sich gemäß den mit Pfeilen angedeuteten Fließbewegungen im Klebespalt 30 in den unterschiedliche Raumrichtungen.

Der injizierte Klebstoff kann in unterschiedliche Richtungen zu den Austrittsöffnungen 14 in den Seitenflächen 15a, 15b, 15c, 15d des Adapterkörpers 10 gelangen. Es ist ferner erkennbar, dass die horizontal im Adapterkörper 10 ausgebildeten Kanäle 12 nicht mittig im Adapterkörper, sondern im oberen Drittel des Adapterkörpers angebracht sind. Hierdurch ergibt sich nach dem Injizieren von Klebstoff ein Fließverhalten, bei dem zunächst der obere vertikale Kanal 12 gefüllt wird, anschließend die beiden horizontalen Kanäle 12 und dann der Klebstoff an den Seiten des Adapterkörpers in den Klebespalt 30 austritt. Im Klebespalt 30 bilden sich Fließfronten entsprechend der Fließbewegung des Klebstoffes. Nachdem auch Klebstoff aus dem unteren vertikalen Kanal 12 durch die Austrittsöffnung 14 aus der unteren Seitenfläche 15b austritt, laufen die Fließfronten des aus den Austrittsöffnungen 14 austretenden Klebstoffes aufeinander zu und treffen sich zunächst in den unteren Ecken, um dann anschließend auch den oberen Teil der Klebstoffkavität zu füllen.

Ein seitliches Austreten von Klebstoff (d.h. ein Austreten in und entgegen der horizontalen Pfeilrichtung in der Figur 1) wird wirksam dadurch verhindert, dass der Adapterkörper 10 umlaufend entlang der Seitenflächen 15a, 15b, 15c, 15d, und zwar jeweils benachbart zu den beiden Injektionsöffnungen 13, zwei umlaufende Stege 19 als Barrieren aufweist.

Die jeweilige Öffnung 4 hat gegenüber der jeweiligen Injektionsöffnung 13 einen vergrößerten Querschnitt, so dass nach dem vollständigen Befüllen des Klebespaltes 30 überschüssiger Klebstoff aus der Öffnung 14 heraustritt, so dass die Öffnung 14 gleichzeitig auch die Funktion einer Indikatoröffnung innehat.

Mit Bezug auf die Figur 1 lässt sich das Verfahren zum Reparieren eines Hohlprofils 2 mit einem Reparaturprofil 3 mit den dargestellten Klebstoffverteilvorrichtungen 1 wie folgt erläutern:
Die beiden Klebstoffverteilvorrichtungen 1 weisen eine zur Innenkontur des zu reparierenden Hohlprofils 2 und des Reparaturprofils 3 im Wesentlichen korrespondierende, jedoch im Querschnitt verkleinerte Außenkontur auf. Es erfolgt das Einbringen der wandseitigen Öffnungen 4 in das Hohlprofil 2 und in das Reparaturprofil 3. Danach erfolgt das Einbringen der Klebstoffverteilvorrichtungen 1 mit ihrem Verbindungsabschnitt 10a in das Hohlprofil 2 sowie mit ihrem Verbindungsabschnitt 10b in das Reparaturprofil 3 derart, dass die jeweiligen Öffnungen 4 mit den korrespondierenden Injektionsöffnungen 13 jeweils fluchten.

Anschließend wird das Injizieren eines Klebstoffes über die Injektionsöffnungen 13 in die Kanalsysteme 11 vorgenommen, solange bis der betroffene Klebespalt 30 vollständig mit Klebstoff gefüllt ist.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. So kann zum Beispiel die Klebstoffverteilvorrichtung nur ein einziges (d. h. ein für das Hohlprofil und das Reparaturprofil gemeinsames) Kanalsystem aufweisen.

## Patentansprüche

1. Klebstoffverteilvorrichtung (1) zur Verwendung bei der Reparatur oder Instandsetzung eines zu reparierenden Hohlprofils (2) zum Verbinden mit einem Reparaturprofil (3), bestehend aus einem Adapterkörper (10), der über einen ersten einsteckseitigen Verbindungsabschnitt verfügt, zum Einstecken in das zu reparierende Hohlprofil (2) und einem zweiten einsteckseitigen Verbindungsabschnitt zum Einstecken in das Reparaturprofil (3), wobei in jedem der einsteckseitigen Abschnitte je ein Kanalsystem (11) aus wenigstens zwei miteinander verbundenen Kanälen (12) angeordnet ist und wenigstens ein Kanal (12) mit einer Injektionsöffnung (13) zum Injizieren von Klebstoff in das Kanalsystem (11) verbunden ist, wobei ferner jeder Kanal (12) mit wenigstens einer Austrittsöffnung (14) zum Austritt des injizierten Klebstoffs aus dem Kanalsystem (11) ausgebildet ist.

2. Klebstoffverteilvorrichtung (1) gemäß Anspruch 1, **dadurch gekennzeichnet, dass** der Adapterkörper (10) für jedes der beiden Kanalsysteme (11) eine Injektionsöffnung (13) aufweist.

3. Klebstoffverteilvorrichtung (1) gemäß Anspruch 1 oder 2, **dadurch gekennzeichnet, dass** das oder die Kanalsysteme (11) als mehrdirektionale Kanalsysteme (11) ausgebildet ist bzw. sind, welche einen durch die Injektionsöffnung (13) injizierten Klebstoff in unterschiedliche Richtungen zu Seitenflächen (15a, 15b, 15c, 15d) des Adapterkörpers (10) leiten können.

4. Klebstoffverteilvorrichtung (1) gemäß einem der Ansprüche 1 bis 3, **dadurch gekennzeichnet, dass** die Austrittsöffnung (14) der Kanäle (12) an Seitenflächen (15a, 15b, 15c, 15d) des Adapterkörpers (10) ausgebildet sind.

5. Klebstoffverteilvorrichtung (1) gemäß einem der vorhergehenden Ansprüche, **dadurch gekennzeichnet, dass** jeweils zwei oder mehrere der Kanäle (12) über wenigstens einen Verbindungspunkt (16) oder einen mehrdirektionalen Knotenpunkt miteinander verbunden sind.

6. Klebstoffverteilvorrichtung (1) gemäß einem der vorhergehenden Ansprüche, **dadurch gekennzeichnet, dass** der Adapterkörper (10) entlang der Seitenflächen (15a, 15b, 15c, 15d) jeweils benachbart zu der oder den Injektionsöffnungen (13) jeweils zwei umlaufende Stege (19) aufweist.

7. Verfahren zum Reparieren eines Hohlprofil (2) mit einem Reparaturprofil (3) mit einer Klebstoffverteilvorrichtung (1) gemäß einem der vorhergehenden Ansprüche 1 - 6 mit wenigstens den folgenden Schritten:
a. Bereitstellen der Klebstoffverteilvorrichtung (1), die eine zur Innenkontur des zu reparierenden Hohlprofils (2) und des Reparaturprofils (3) korrespondierende, jedoch im Querschnitt verkleinerte Außenkontur aufweist;
b. Einbringen einer oder mehrerer wandseitiger Öffnung(en) (4) in das Hohlprofil (2) und/oder Reparaturprofil (3) entsprechend der Anzahl der vorhandenen Injektionsöffnungen (13) der Klebstoffverteilvorrichtung (1);
c. Einbringen der Klebstoffverteilvorrichtung (1) mit jeweils einem Verbindungsabschnitt in das Hohlprofil (2) sowie in das Reparaturprofil (3) derart, dass die Öffnung(en) (4) mit der oder den korrespondierenden Injektionsöffnung(en) (13) jeweils fluchten unter Ausbildung eines umlaufenden Klebespaltes (30);
d. Injizieren eines Klebstoffes über die Injektionsöffnungen (13) in das oder die Kanalsysteme (11), solange bis der Klebespalt (30) vollständig mit Klebstoff gefüllt ist, wodurch das Hohlprofil (2) und/oder das Reparaturprofil (3) mit dem Adapterkörper (10) verbunden ist oder sind

8. Verfahren nach Anspruch 7, **dadurch gekennzeichnet, dass** der Schritt c) in drei Teilschritten erfolgt, wobei in einem ersten Schritt die Klebstoffverteilvorrichtung (1) vollständig in eines der beiden Profile (2, 3) eingeschoben wird, in einem zweiten Schritt die beiden Profile (2, 3) mit ihrer Stirnseite bündig zueinander positioniert werden und in einem dritten Schritt die Klebstoffverteilvorrichtung (1) soweit in das andere Profil (2, 3) verschoben wird, dass die Öffnungen (4) mit den jeweils korrespondierenden Injektionsöffnungen (13) fluchten, und zwar unter Ausbildung eines umlaufenden Klebespaltes (30).

9. Verfahren nach Anspruch 7 oder 8, **dadurch gekennzeichnet, dass** die Öffnungen (4) einen größeren Öffnungsquerschnitt aufweisen als die Injektionsöffnungen (13), so dass unmittelbar nach dem vollständigen Befüllen des Klebespaltes (30) in Schritt d) Klebstoff aus der oder den Öffnungen (4) austritt.

10. Reparaturprofil (3) bestehend aus einem Hohlprofilabschnitt und einer mit dem Hohlprofilabschnitt verbundenen Klebstoffverteilvorrichtung (1) gemäß einem der Ansprüche 1 - 6.

## Claims

1. An adhesive distribution device (1) for use in the repair or reconditioning of a hollow profile (2) which is to be repaired for connecting to a repair profile (3), comprises an adapter body (10), which has a first insertion-side connecting portion, for inserting into the hollow profile (2) to be repaired, and a second insertion-side connecting portion for inserting into the repair profile (3), wherein one channel system (11) in each case comprises at least two channels (12) connected together is arranged in each of the insertion-side portions and at least one channel (12) is connected to an injection opening (13) for injecting adhesive into the channel system (11), wherein further each channel (12) is formed with at least one exit opening (14) for the injected adhesive to emerge from the channel system (11).

2. An adhesive distribution device (1) according to Claim 1, **characterised in that** the adapter body (10) has one injection opening (13) for each of the two channel systems (11).

3. An adhesive distribution device (1) according to Claim 1 or Claim 2, **characterised in that** the channel system or systems (11) is or are formed as multidirectional channel systems (11) which can conduct an adhesive injected through the injection opening (13) in different directions to side faces (15a, 15b, 15c, 15d) of the adapter body (10).

4. An adhesive distribution device (1) according to one of Claims 1 to 3, **characterised in that** the exit openings (14) of the channels (12) are formed on side faces (15a, 15b, 15c, 15d) of the adapter body (10).

5. An adhesive distribution device (1) according to one of the preceding claims, **characterised in that** in each case two or more of the channels (12) are connected together by way of at least one connection point (16) or a multidirectional junction point.

6. An adhesive distribution device (1) according to one of the preceding claims, **characterised in that** the adapter body (10) has in each case two encircling webs (19) along the side faces (15a, 15b, 15c, 15d) in each case adjacently to the injection opening or openings (13).

7. A method for repairing a hollow profile (2) with a repair profile (3) with an adhesive distribution device (1) according to one of the preceding Claims 1 - 6, having at least the following steps:
a. making available the adhesive distribution device (1), which has an outer contour which corresponds to the internal contour of the hollow profile (2) to be repaired and of the repair profile (3), but is reduced in cross-section;
b. introducing one or more wall-side opening(s) (4) into the hollow profile (2) and/or repair profile (3), corresponding to the number of injection openings (13) of the adhesive distribution device (1) which are present;
c. introducing the adhesive distribution device (1) with in each case one connecting portion into the hollow profile (2) and into the repair profile (3) such that the opening(s) (4) is/are flush with the corresponding injection opening(s) (13) in each case, forming an encircling gluing gap (30);
d. injecting an adhesive via the injection openings (13) into the channel system or systems (11), until the gluing gap (30) is completely filled with adhesive, as a result of which the hollow profile (2) and/or the repair profile (3) is or are connected to the adapter body (10).

8. A method according to Claim 7, **characterised in that** step c) takes place in three partial steps, wherein in a first step the adhesive distribution device (1) is inserted completely into one of the two profiles (2, 3), in a second step the two profiles (2, 3) are positioned with their end faces flush with each other, and in a third step the adhesive distribution device (1) is displaced so far into the other profile (2, 3) that the openings (4) are flush with the corresponding injection openings (13) in each case, namely forming an encircling gluing gap (30).

9. A method according to Claim 7 or Claim 8, **characterised in that** the openings (4) have a larger opening cross-section than the injection openings (13), so that adhesive emerges from the opening or openings (4) directly after complete filling of the gluing gap (30) in step d).

10. A repair profile (3) comprises a hollow profile portion and an adhesive distribution device (1) according to one of Claims 1-6 connected to the hollow profile portion.

## Revendications

1. Dispositif de distribution d'adhésif (1) destiné à être utilisé lors de la réparation ou la remise en état d'un profilé creux (2) à réparer pour permettre sa liaison avec un profilé de réparation (3) constitué par un corps adaptateur (10) qui est équipé d'un premier segment de liaison côté enfichage destiné à être enfiché dans le profilé creux (2) à réparer et d'un second segment de liaison côté enfichage destiné à être enfiché dans le profilé de réparation (3), dans chacun des segments côté enfichage étant installé un système de canal (11) constitué d'au moins deux canaux (12) reliés l'un à l'autre et au moins un canal (12) étant relié à une ouverture d'injection (13) destinée à l'injection d'adhésif dans le système de canal (11), chaque canal (12) étant en outre réalisé avec au moins une ouverture de sortie (14) permettant la sortie de l'adhésif injecté du système de canal (11).

2. Dispositif de distribution d'adhésif conforme à la revendication 1,
**caractérisé en ce que**
le corps adaptateur (10) comporte une ouverture d'injection (13) pour chacun des deux systèmes de canal (11).

3. Dispositif de distribution d'adhésif (1) conforme à la revendication 1 ou 2,
**caractérisé en ce que**
le ou les système(s) de canal (11) est(sont) réalisé(s) sous la forme de système(s) de canal (11) multidirectionnel(s), qui peut(peuvent) transférer un adhésif injecté par l'ouverture d'injection (13) dans différentes directions vers des surfaces latérales (15a, 15b, 15c, 15d) du corps adaptateur (10).

4. Dispositif de distribution d'adhésif (1) conforme à l'une des revendications 1 à 3,
**caractérisé en ce que**
les ouvertures de sortie (14), des canaux (12) sont réalisées sur des surfaces latérales (15a, 15b, 15c, 15d) du corps adaptateur (10).

5. Dispositif de distribution d'adhésif (1) conforme à l'une des revendications précédentes,
**caractérisé en ce que**
deux ou plusieurs canaux (12) sont respectivement reliés par au moins un point de connexion (16) ou une jonction multidirectionnelle.

6. Dispositif de distribution d'adhésif (1) conforme à l'une des revendications précédentes,
**caractérisé en ce que**
le corps adaptateur (10) comporte respectivement deux barrettes périphériques (19) s'étendant le long des surfaces latérales (15a, 15b, 15c, 15d) respectivement au voisinage de la ou des ouverture(s) d'injection (13).

7. Procédé de réparation d'un profilé creux (2) avec un profilé de réparation (3) à l'aide d'un dispositif de distribution d'adhésif (1) conforme à l'une des revendications précédentes 1 à 6, comportant au moins les étapes suivantes consistant à :
a. ce procurer un dispositif de distribution d'adhésif (1) ayant un contour externe correspondant au contour interne du profilé creux (2) à réparer et du profilé de réparation (3) mais ayant une section diminuée,
b. réaliser une ou plusieurs ouverture(s) (4) côté paroi dans le profilé creux (2) et/ou le profilé de réparation (3) selon le nombre d'ouvertures d'injection (13) du dispositif de distribution d'adhésif (1),
c. introduire respectivement le dispositif de distribution d'adhésif (1) avec un segment de liaison dans le profilé creux (2) ainsi que dans le profilé de réparation, de sorte que la ou les ouverture(s) (4) coïncide(nt) respectivement avec la ou les ouverture(s) d'injection (13) correspondantes en formant un intervalle d'adhésif périphérique (30),
d. injecter un adhésif par les ouvertures d'injection (13) dans le ou les système(s) de canal (11) jusqu'à ce que l'intervalle d'adhésif (30) soit totalement rempli d'adhésif de sorte que le profilé creux (2) et/ou le profilé de réparation (3) soi(en)t relié(s) au corps adaptateur (10).

8. Procédé conforme à la revendication 7,
**caractérisé en ce que** l'étape c) est effectuée en trois étapes partielles selon lesquelles dans une première étape partielle le dispositif de distribution d'adhésif (1) est totalement glissé dans l'un des deux profilés (2, 3), dans une seconde étape partielle les côtés frontaux des deux profilés (2, 3) sont positionnés au même niveau et dans une troisième étape partielle le dispositif de distribution d'adhésif (1) est glissé dans l'autre profil (2, 3) de sorte que les ouvertures (4) coïncident avec les ouvertures d'injection (13) respectivement correspondantes, ce en formant un intervalle d'adhésif (30) périphérique.

9. Procédé conforme à la revendication 7 ou 8,
**caractérisé en ce que**
les ouvertures (4) ont une plus grande section d'ouverture que les ouvertures d'injection (13) de sorte que, immédiatement après le remplissage total de l'intervalle d'adhésif (30) dans l'étape d) de l'adhésif sorte de la ou des ouverture(s) (4).

10. Profilé de réparation (3) constitué d'un segment de profilé creux et d'un dispositif de distribution d'adhésif (1) relié au segment de profilé creux conforme à l'une des revendications 1 à 6.
